# EUROPÄISCHE PATENTSCHRIFT

(11) **EP 0 582 135 B1**
(45) Veröffentlichungstag und Bekanntmachung des Hinweises auf die Patenterteilung: **17.09.1997**
(21) Anmeldenummer: 93111714.7
(22) Anmeldetag: 22.07.1993
(51) Int. Cl.: B23B 27/04

(54) **Stech- und/oder Drehwerkzeug**
Grooving and/or turning tool
Outil à saigner et/ou à tourner

(30) Priorität: 05.08.1992 DE 4225822
(43) Veröffentlichungstag der Anmeldung: 09.02.1994
(73) Patentinhaber: KARL-HEINZ ARNOLD GmbH, D-73760 Ostfildern (DE)
(72) Erfinder: Nikstat, Siegmar, D-73760 Ostfildern (DE)
(74) Vertreter: Reimold, Otto, Dr. Dipl.-Phys.

(56) Entgegenhaltungen:
- EP-A- 365 653
- DD-A- 270 479
- DE-A- 2 647 546
- DE-A- 2 758 344
- DE-A- 3 942 586
- DE-B- 2 548 870
- DE-U- 9 114 952

## Beschreibung

Die Erfindung betrifft ein Stech- und/oder Drehwerkzeug mit einer Schneidplatte, die mindestens ein Bearbeitungs-Endstück zum Bearbeiten eines Werkstücks durch Einstechen mittels einer stirnseitigen Hauptschneide und/oder Abdrehen mittels einer seitlichen Nebenschneide aufweist, und einem an einer Werkzeugmaschine befestigbaren Schneidplattenhalter, der einen Halterkopf zum auswechselbaren Halten der Schneidplatte aufweist, der eine von vorne oben nach hinten unten geneigt verlaufende Auflagefläche zum längsverschieblichen und seitlich geführten Auflegen der Schneidplatte bildet, einen dem hinteren Schneidplattenende zugeordneten Schneidplattenanschlag aufweist und ein der Schneidplattenoberseite zugeordnetes Spannelement trägt, das schwenkbeweglich angeordnet ist und einen vorderen Hebelarm mit einer an der Schneidplatte angreifenden und diese gegen die Auflagefläche spannenden Spannpartie sowie einen hinteren Hebelarm mit einer in Höhenrichtung verschraubbaren und sich auf der feststehenden Oberseite des Halterkopfes abstützenden Spannschraube bildet.

Bei der spanabhebenden Bearbeitung eines Werkstücks mit Hilfe eines solchen Werkzeugs treten an der Schneidplatte sehr große Kräfte auf. Es ist daher ein äußerst stabiler Halt der Schneidplatte erforderlich. Dabei sollte die Schneidplatte außerdem möglichst positionsgenau am Schneidplattenhalter fixierbar sein, da sonst die eventuell bei der Montage oder aufgrund der Bearbeitungskräfte auftretenden Verrückungen zu einem unerwünschten Arbeitsergebnis führen würden.

Bei einem aus der DE-OS 39 42 585 bekannten Werkzeug der eingangs genannten Art wird das Spannelement von einer einstückigen Anformung des Halterkopfes mit T-ähnlicher Gestalt gebildet. Der Schneidplattenanschlag, bis zu dem die Schneidplatte bei ihrer Montage eingesetzt wird, befindet sich unmittelbar unterhalb der einstückigen Anformung des Spannelementes. Schraubt man die Spannschraube nach unten, wird das Spannelement elastisch verformt und gegen die Schneidplattenoberseite gespannt.

Aufgrund dieser elastischen oder sozusagen weichen Ausbildung besteht die Gefahr, daß beim Auftreten sehr großer Bearbeitungskräfte von vorne her auf die Schneidplatte der vordere Hebelarm des Spannelementes nach oben hin etwas ausweicht. Ferner führt der Spannvorgang zu undefinierten sonstigen Verformungen auch am Halterkopf, so daß vor allem der dort sitzende Schneidplattenanschlag keinen unverrückbaren Fixpunkt bildet. Verspannt man die Schneidplatte, kann sich der Schneidplattenanschlag etwas verlagern, so daß die Schneidplatte rückseitig nicht mehr abgestützt ist. Die Schneidplatte kann sich dann aufgrund der von vorne her einwirkenden Bearbeitungskräfte entsprechend nach hinten verschieben. Dabei ist ferner zu berücksichtigen, daß das Spannelement die Schneidplatte rechtwinkelig gegen die Auflagefläche des Halterkopfes drückt, so daß die Schneidplatte erst beim Betrieb, wenn die Bearbeitungskräfte von vorne her einwirken, gegen den Schneidplattenanschlag gepreßt wird. Auch dies führt zu Maßtoleranzen bei der Werkstückbearbeitung.

Ein aus der EP-PS 03 65 653 bekanntes Werkzeug ist in ähnlicher Weise nachteilig. In diesem Falle ist das nur einarmige und keine Spannschraube aufweisende Spannelement ebenfalls einstückig an den Haltekopf angeformt. Dieses Spannelement weist eine Rastkante auf, zwischen der und der Auflagefläche hindurch die Schneidplatte unter elastischem Ausweichen des Spannelements eingesetzt wird, bis eine nach hinten weisende Fläche an der Schneidplatte gegen die einen Anschlag bildenden Stirnseite des Spannelementes stößt. Im eingesetzten Zustand hintergreift das Spannelement eine Rasterhebung an der Schneidplatte.

Die Spannkraft wird hier allein durch die Eigenelastizität des Spannelements bewirkt. Dabei muß diese Elastizität so groß sein, daß sich das Spannelement beim Einsetzen der Schneidplatte selbsttätig verschwenkt und mit dieser verrastet. Es ist ersichtlich, daß diese Anordnung noch weicher als die des aus der DE-OS 30 42 585 hervorgehenden Werkzeugs ist. Dementsprechend kann es beim Auftreten großer Kräfte auch hier zu Verrückungen kommen. Dabei kommt hinzu, daß der von der Spannelement-Stirnseite gebildete Anschlag die Bewegungen des Spannelementes mitmacht, so daß er die Schneidplattenposition nicht definieren kann und nur als Montagehilfe anzusehen ist.

Der vorliegenden Erfindung liegt deshalb die Aufgabe zugrunde, ein Stech- und/oder Drehwerkzeug der eingangs genannten Art zu schaffen, bei dem die Schneidplatte im festgespannten Zustand eine genau definierte Lage am Schneidplattenhalter einnimmt und diese Lage unabhängig von den auftretenden Bearbeitungskräften unverrückbar beibehält.

Diese Aufgabe wird erfindungsgemäß dadurch gelöst, daß das Spannelement auf einer Schwenkachse am Halterkopf gelagert ist und daß die Schneidplattenoberseite eine Spannausnehmung enthält, deren Wand oder Begrenzungskante eine von der in die Spannausnehmung eingreifenden Spannpartie des Spannelements hintergriffene Spannfläche bildet, so daß die Schneidplatte sowohl gegen die Auflagefläche als auch gegen den Schneidplattenanschlag gespannt wird.

Beim Festziehen des Spannelementes übt also dessen Spannpartie auf die Schneidplatte eine nach hinten unten gerichtete Kraft mit einer zur Auflagefläche weisenden Kraftkomponenten und einer zum Schneidplattenanschlag weisenden Kraftkomponenten aus, so daß mit Sicherheit vermieden wird, daß die eingespannte Schneidplatte vor dem Schneidplattenanschlag endet. Ferner hält das Spannelement die Schneidplatte auch beim Betrieb fest gegen den Anschlag, so daß selbst nach vorne zum Werkstück hin einwirkende Kräfte, beispielsweise wenn die Schneidplatte aus einer in das Werkstück eingestochenen Nut herausgezogen wird, keine Schneidplattenverlagerung zur Folge haben können.

Der geneigte Verlauf der Auflagefläche begünstigt das nach hinten Ziehen der Schneidplatte durch das Spannelement. Außerdem liegt auf diese Weise der Schneidplattenanschlag weiter unten als die das Werkstück bearbeitende Schneide, so daß die in Zustellrichtung auf die Schneidplatte ausgeübte Bearbeitungskraft ein die Schneidplatte nach hinten unten gegen die Auflagefläche drückendes Moment erzeugt.

Besonders vorteilhaft ist es bei dem erfindungsgemäßen Werkzeug ferner, daß der Schneidplattenanschlag abseits des Spannelements am feststehenden Teil des Halterkopfes sitzt. Dies bringt gegenüber bekannten Werkzeugen, bei denen der Schneidplattenanschlag am Spannelement angeordnet ist, den Vorteil einer unabhängig vom beim Spannen eine Bewegung ausführenden Spannelement vorbestimmten Anschlagposition mit sich.

Schraubt man die Spannschraube nach unten, wird der hintere Hebelarm nach oben und somit die Spannpartie nach unten gegen die Schneidplatte gepreßt. Auf diese Weise erhält man bei kurzer Bauweise aufgrund der Hebelverhältnisse eine große Spannkraft.

Ein zweiarmiges, mittels einer sich auf der Oberseite des Halterkopfes aufstützendes Spannelement, das auf einer Schwenkachse am Halterkopf gelagert ist, geht zwar beispielsweise aus der DD-PS 270479 hervor. Bei diesem Werkzeug ist jedoch überhaupt kein der Schneidplatten-Rückseite zugeordneter Schneidplattenanschlag am halterkopf vorhanden. Dementsprechend übt das Spannelement auch keine nach hinten hin gerichtete Spannkraft auf die Schneidplatte aus.

Die Spannausnehmung kann einen winkelig oder bogenförmigen Querschnitt aufweisen.

Ist die Spannfläche über die Schneidplattenbreite durchgehend ausgebildet, spielen Breitentoleranzen der Spannpartie des Spannelementes keine Rolle.

Der Schneidplattenanschlag kann von einem in eine Querbohrung des Halterkopfes eingepaßten Rundbolzen gebildet werden. Auf diese Weise ergibt sich zwischen der Schneidplatte und dem Schneidplattenanschlag eine Linienberührung. Die bei einer solchen Linienberührung auftretenden Toleranzen sind in der Regel geringer als im Falle einer Flächenberührung.

In Zusammenhang hiermit ist es des weiteren zweckmäßig, daß die Querbohrung und der Rundbolzen über einen Teil ihres Querschnitts innerhalb der mit ihrer Oberseite die Auflagefläche bildenden Haltekopfpartie verlaufen. Auf diese Weise ragt der Schneidplattenanschlag nicht frei über die Auflagefläche vor sondern ist in diese teilweise eingelassen, so daß er nach hinten hin abgestützt ist. Die bei der Werkstückbearbeitung von vorne nach hinten auf die Schneidplatte ausgeübte und von dieser auf den Schneidplattenanschlag übertragene Kraft wird somit sicher aufgefangen, ohne daß die Gefahr einer Vervormung des Anschlag besteht.

Bei der Werkstückbearbeitung, insbesondere wenn man mit einer der seitlichen Nebenschneiden arbeitet, können auch große Querkräfte auftreten, die auf die Schneidplatte ein Kippmoment um die Schneidplatten-Längsrichtung ausüben. Dieses Kippmoment muß von dem Spannelement aufgenommen werden. In diesem Zusammenhang ist es vorteilhaft, daß das Spannelement einen U-ähnlichen Querschnitt aufweist und auf einen zwischen die beiden Spannelementschenkel greifenden und an diesen anliegenden Lagervorsprung an der Oberseite des feststehenden Teils des Halterkopfes aufgesetzt ist, wobei einer der Schenkel die Spannpartie bildet. Auf diese Weise wird das Kippmoment nicht nur über die Schwenkachse sondern vor allem über die beiden Schenkel vom Halterkopf aufgenommen.

Die Schneidplatte kann prinzipiell nur mit einem Bearbeitungs-Endstück ausgestattet sein. Handelt es sich jedoch um eine Schneidplatte, die an beiden Enden jeweils ein gleiches Bearbeitungs-Endstück aufweist, ist es vorteilhaft, daß in Seitenansicht gesehen die Oberseiten der beiden Bearbeitungs-Endstücke stupfwinkelig zueinander angeordnet sind. Hiermit wird dem geneigten Verlauf der Auflagefläche Rechnung getragen. Dabei kann in Seitenansicht gesehen die Spannausnehmung in der Mitte der Schneidplattenoberseite zwischen den Bearbeitungs-Endstücken angeordnet sein und beidseitig jeweils eine Spannfläche bilden. Je nach dem, mit welchem der beiden Bearbeitungs-Endbereiche das Werkstück bearbeitet wird, beaufschlagt die Spannpartie des Spannelementes die eine oder die andere Seite der Spannausnehmung.

In Zusammenhang mit einem Werkzeug, bei dem die Schneidplatte an beiden Enden jeweils ein gleiches Bearbeitungs-Endstück aufweist und eine sowohl zur in halber Schneidplattenbreite verlaufenden Längsmittelebene als auch zur in halber Länge rechtwinkelig zur Längsmittelebene verlaufenden Quermittelebene symmetrische Gestalt aufweist, wobei die Auflagefläche seitlich am Haltekopf angeordnet ist, so daß bei eingespannter Schneidplatte das hintere Bearbeitungs-Endstück zumindest mit dem Eckbereich zwischen Hauptschneide und außen angeordneter Nebenschneide seitlich vor den Haltekopf vorsteht, ist es schließlich noch zweckmäßig, daß die Auflagefläche und das Spannelement in Stirnansicht vom zu bearbeitenden Werkstück her gesehen leicht verdreht so angeordnet sind, daß bei eingespannter Schneidplatte deren Längsmittelebene einen kleinen Winkel mit der Vertikalen bildet und dabei von oben seitlich außen nach unten hin verläuft. Dabei reicht bereits ein Winkel, der der Größenordnung nach im Bereich von 1° bis 2° liegt. Durch diese verdrehte Anordnung kommt der hintere Eckbereich zwischen Hauptschneide und außen angeordneter Nebenschneide in Verbindung mit der von vorne oben nach hinten unten verlaufenden Auflagefläche in Stirnansicht gesehen weiter nach innen zu liegen als das entsprechende Eck des vorderen Bearbeitungs-Endbereichs. Wird vorne mit der Nebenschneide eine Werkstückfläche abgedreht, liegt somit das hintere Eck etwas von der abgedrehten Werkstückfläche entfernt, so daß die hinten befindliche Nebenschneide nicht mit dem Werkstück in Berührung gelangt. Dies wird ohne Veränderung der Schneidplatte erreicht, so daß man die gleiche Schneidplatte für unterschiedliche Schneidplattenhalter verwenden kann, bei denen die Schneidplatte entweder an der einen oder an der anderen Seite des Halterkopfes befestigt wird.

Ein Ausführungsbeispiel der Erfindung wird nun anhand der Zeichnung im einzelnen erläutert. Es zeigen:

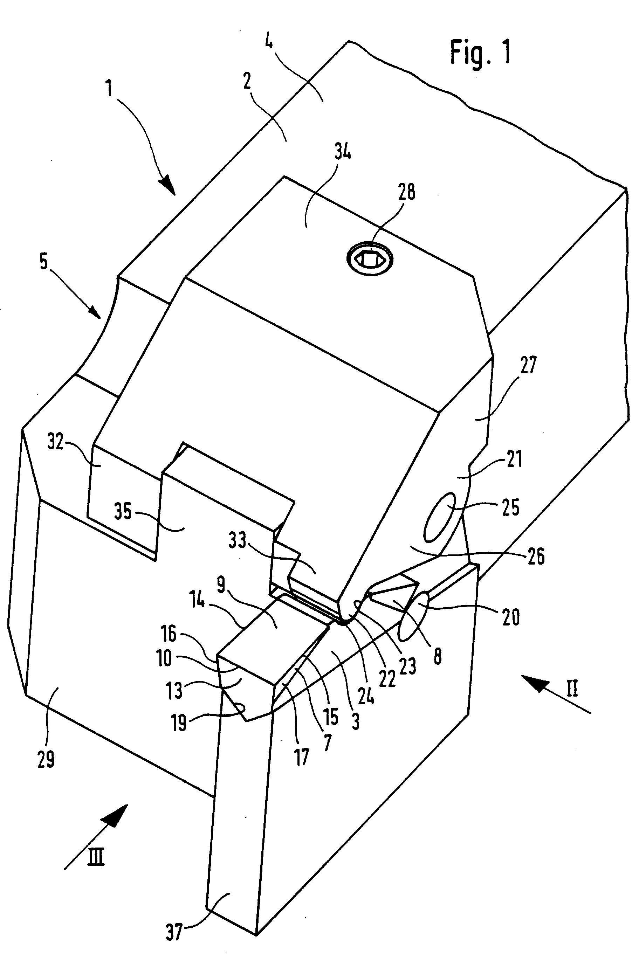

- Fig. 1: ein erfindungsgemäßes Stech- und/oder Drehwerkzeug in Schrägansicht mit abgebrochen gezeichnetem Halterschaft,
- Fig. 2: das Werkzeug nach Fig. 1 in Seitenansicht gemäß Pfeil II zusammen mit einem angedeuteten Werkstück, wobei das Werkzeug aus der in das Werkstück eingebrachten Nut herausgefahren ist, und
- Fig. 3: das gleiche Werkzeug in Stirnansicht gemäß Pfeil III.

Das aus der Zeichnung hervorgehende Stech- und/oder Drehwerkzeug 1 setzt sich aus einem Schneidplattenhalter 2 und einer Schneidplatte 3 zusammen, die auswechselbar vom Schneidplattenhalter 2 gehalten wird. Dabei besteht der Schneidplattenhalter 2 aus einem Schaft 4 rechteckigen Querschnitts, an den vorne ein Halterkopf 5 angesetzt ist. Der Schaft 4 kann in üblicher Weise an einer Werkzeugmaschine eingespannt werden, auf der das jeweilige Werkstück 6 bearbeitet werden soll. Diese Werkstückbearbeitung erfolgt durch die aus Hartmetall bestehende Schneidplatte 3, die lösbar am Halterkopf 5 befestigt wird.

Bei der dargestellten Schneidplatte 3 handelt es sich um eine sogenannte Wendeschneidplatte länglicher Gestalt, die an beiden Enden jeweils ein gleiches Bearbeitungs-Endstück 7 bzw. 8 aufweist, so daß die Schneidplatte 3 in zwei umgekehrten Lagen verwendet werden kann, wobei jeweils das dem Werkstück 6 zugewandte vordere Bearbeitungs-Endstück, in der dargestellten Position das Endstück 7, wirksam ist. Die nachfolgend beschriebenen Maßnahmen sind jedoch auch in Zusammenhang mit nur ein Bearbeitungs-Endstück aufweisender Schneidplatte ausführbar.

Die Oberseite 9 des im eingespannten Zustand vorne befindlichen Bearbeitungs-Endstückes 7 liegt frei. An ihr ist (das gleiche gilt, falls vorhanden, für das identisch ausgebildete hintere Endstück 8) vorne eine quer zur Schneidplatten-Längsrichtung L verlaufende Hauptschneide 10 angeordnet, die sich über die ganze Schneidplattenbreite erstreckt und zum Einstechen einer Ringnut 11 in das um eine zur Hauptschneide 10 parallele Achse 12 rotierende Werkstück 6 dient. Zum Einstechen der Ringnut 11 wird das Werkzeug 1 mit der Hauptschneide 10 voran in Zustellrichtung 13 von der Seite her gegen den Werkstückumfang gefahren, so daß die Hauptschneide 10 einen der Ringnut 11 entsprechenden Spanabtrag vornimmt.

Diese Hauptschneide 10 bildet die Übergangskante zwischen der Oberseite 9 und der Stirnfläche 13 der Schneidplatte 3, wobei die Stirnfläche 13 in Seitenansicht gesehen mit der Oberseite 9 einen Winkel von 90° abzüglich eines Freiwinkels in der Größenordnung von beispielsweise 6° bildet.

An der Oberseite 9 des jeweiligen Bearbeitungs-Endstückes sind ferner zwei seitliche, einander entgegengesetzte Nebenschneiden 14,15 angeordnet, die von den Enden der Hauptschneide 10 abgehen und mit der Hauptschneide 1o jeweils einen Winkel von 90° abzüglich eines nach hinten gerichteten Freiwinkels in der Größenordnung von beispielsweise etwa 2° bilden, so daß die beiden Nebenschneiden von der Hauptschneide ausgehend ein klein wenig aufeinander zu laufen. Von den beiden Nebenschneiden 14 und 15 gehen die beiden Außenseite 16 und 17 des jeweiligen Bearbeitungs-Endstücks nach unten hin ab, die in Stirnansicht gesehen mit der Oberseite 9 einen Winkel von 90° abzüglich eines nach unten gerichteten Freiwinkels in der Größenordnung von beispielsweise etwa 6° bilden.

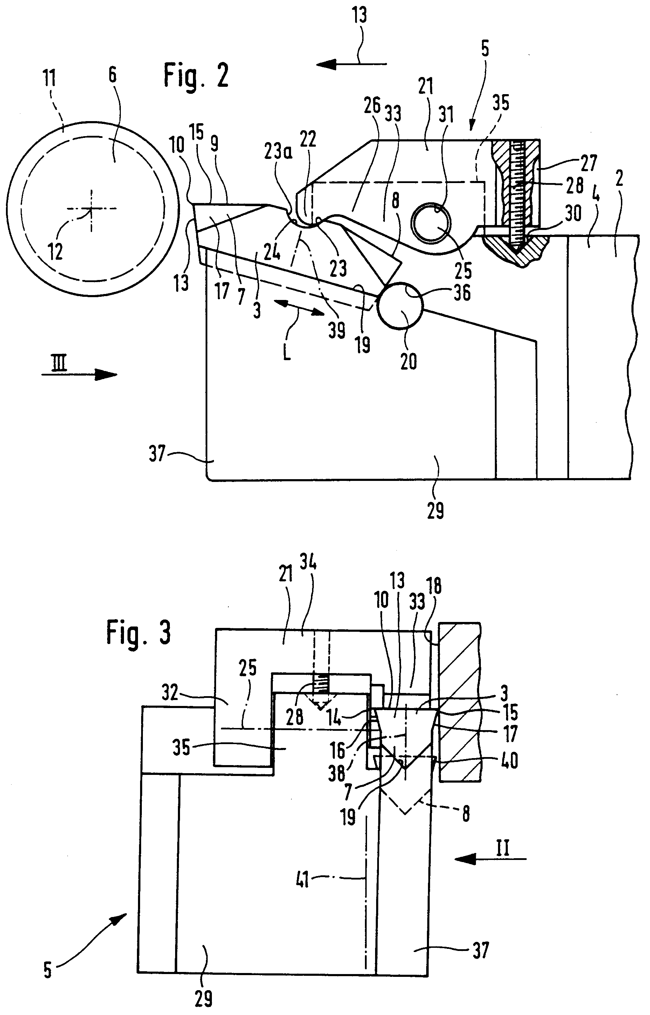

Mittels der Nebenschneiden 14,15 kann durch eine entsprechende Vorschubbewegung des Werkzeugs 1 parallel zur Rotationsachse 12 eine rechtwinkelig zu dieser stehende Werkstückfläche abgedreht werden, beispielsweise eine Seitenwand der Ringnut 11. In Fig. 3 ist eine solche durch die Nebenschneide 15 abgedrehte Werkstückfläche 18 angedeutet.

Die sonstige Ausbildung der Oberseite 9 der Bearbeitungs-Endstücke 7,8, d.h. das Auftreten positiver oder negativer Spanwinkel oder das Vorhandensein von Spanformern usw., interessiert im vorliegenden Zusammenhang nicht.

Der Halterkopf 5 bildet eine Auflagefläche 19, auf die die Schneidplatte 3 mit ihrer Unterseite aufgesetzt wird. Dabei stellt die Auflagefläche 19 gleichzeitig eine seitliche Führung und Lagerung für die Schneidplatte 3 dar, indem sie von einer prismatischen, im Querschnitt dreieckigen Längsnut gebildet wird, in die die Schneidplatte 3 mit ihrer komplementär ausgebildeten Unterseite einsitzt. Solange die Schneidplatte 3 nicht fest eingespannt ist, kann sie auf der Auflagefläche 19 in Längsrichtung L verschoben werden. Am Halterkopf 5 ist ferner ein Schneidplattenanschlag 20 angeordnet, der dem dem Werkstück 6 entgegengesetzten hinteren Ende, d.h. der hinteren Stirnfläche der Schneidplatte zugeordnet ist. Bei der Montage wird die Schneidplatte 3 von vorne her eingeschoben, bis sie hinten an dem Anschlag 20 anliegt.

Wie bereits erwähnt, wird die Schneidplatte 3 am Halterkopf 5 fest eingespannt. Hierzu dient ein am Halterkopf 5 angeordnetes Spannelement 21, das eine der Schneidplattenoberseite zugewandte und gegen eine an dieser angeordnete Spannfläche 23 arbeitende Spannpartie 22 aufweist. Dabei ist das Spannelement 21 zwischen einer die Schneidplatte 3 freigebenden Lösestellung und einer die Schneidplatte 3 gegen die Auflagefläche 19 spannenden Spannstellung verstellbar, wie im einzelnen noch erläutert wird.

In diesem Zusammenhang ist die Anordnung ferner so getroffen, daß in Seitenansicht gesehen (Fig. 2) die Auflagefläche 19 des Halterkopfes 5 mit ihrer Längsrichtung, die der Längsrichtung L der Schneidplatte 3 entspricht, bezüglich der Zustellrichtung 13 von vorne oben nach hinten unten geneigt verläuft und daß die Spannfläche 23 der Schneidplatte 3 bezüglich der Schneidplattenunterseite und somit bezüglich der Auflagefläche 19 schräg ist und die Spannpartie 22 des Spannelementes 21 hintergreift. Auf diese Weise wird erreicht, daß in der dargestellten Spannstellung die die Spannfläche 23 der Schneidplatte 3 beaufschlagende Spannpartie 22 die Schneidplatte 3 nicht nur gegen die Auflagefläche 19 sondern auch gegen den Schneidplattenanschlag 20 spannt. Es versteht sich, daß die Spannpartie 22 entsprechend gestaltet ist, so daß sie die Schneidplatte entsprechend nach hinten unten drückt. Da die Spannfläche 23 in Seitenansicht gesehen schräg zur Schneidplattenunterseite bzw. zur Auflagefläche 19 gerichtet ist, läßt sich die von der Spannpartie 22 auf die Schneidplatte 3 ausgeübte Kraft in zwei Komponenten zerlegen, von denen die eine gegen die Auflagefläche 19 und die andere gegen den Schneidplattenanschlag 20 gerichtet ist. Aufgrund der form- und kraftschlüssigen Fixierung der Schneidplatte liegt diese unverrückbar fest, und zwar nicht nur nach hinten sondern auch nach vorne hin.

Die Spannfläche 23 kann eben oder auch gekrümmt sein. Es kann sich ferner auch um eine an der Schneidplatte 3 vorhandene Kante handeln.

Beim dargestellten Ausführungsbeispiel wird die Spannfläche 23 von der Wand oder Begrenzungskante einer in die Schneidplattenoberseite engeformten Spannausnehmung 24 gebildet, wobei die Spannpartie 22 des Spannelements 19 eine in die Spannausnehmung 24 eingreifende Gestalt aufweist. Die Spannausnehmung 24 besitzt einen bogenförmigen Querschnitt, so daß sie eine teilzylinderähnliche Gestalt aufweist. Es könnte sich jedoch auch um einen winkeligen, insbesondere um einen dreieckigen Querschnitt handeln.

Eine solche Spannausnehmung 24 bietet im Falle einer Schneidplatte 3 mit zwei endseitigen Bearbeitungs-Endstücken 7,8 den zusätzlichen Vorteil, daß sie , wird sie in Seitenansicht gesehen in der Mitte der Schneidplattenoberseite zwischen den beiden Bearbeitungs-Endstücken 7,8 angeordnet, beidseitig jeweils eine Spannfläche bildet. Dreht man also die dargestellte Schneidplatte 3 um, so daß das Endstück 8 vorne liegt, wäre nicht mehr die Spannfläche 23 sondern die ihr bezüglich der Schneidplattenmitte symmetrisch gegenüberliegende Spannfläche 23a wirksam, die ebenfalls von der Wand der Spannausnehmung 24 gebildet wird.

Die jeweilige Spannfläche 23, d.h. beim Ausführungsbeispiel die Spannausnehmung 24, geht über die Schneidplattenbreite durch, so daß die Spannpartie 22 des Spannelementes 21 entsprechend breit sein und somit die Schneidplatte gut gegen ein seitliches Verkippen sichern kann, wobei außerdem Breitentoleranzen der Spannpartie 22 keine Rolle spielen.

Das Spannelement 21 ist nach Art einer an der Oberseite des Halterkopfes 5 angeordneten Wippe ausgebildet. Dabei ist der mittlere Bereich des Spannelementes 21 schwenkbar auf einer quer, d.h. parallel zur Breitenrichtung der Schneidplatte verlaufenden Schwenkachse 25 schwenkbar gelagert, die am Halterkopf 5 angeordnet ist. Somit werden zwei beiderseits der Schwenkachse 25 angeordnete Hebelarme 26 und 27 gebildet, von denen der vordere Hebelarm 26 die Spannpartie 22 aufweist. Der hintere Hebelarm 27 wird von einer mit ihm in Gewindeeingriff stehenden Spannschraube 28 in Höhenrichtung durchsetzt, deren unteres Ende aus dem Spannelement 21 vorsteht und sich oben auf dem feststehenden Teil 29 des Halterkopfes 5 abstützt. In die Oberseite des feststehenden Teils 29 des Halterkopfes ist eine Ansenkung 30 eingeformt, in die das untere Ende der Spannschraube 28 eingreift. Die Spannschraube 28 ist von oben her zugänglich. Wird sie unter Abstützen am feststehenden Teil 29 des Halterkopfes 5 in der einen oder anderen Richtung verdreht, wird der Hebelarm 27 des Spannelementes 21 entweder zur Oberseite des feststehenden Halterkopfteils 29 hin oder von dieser weg bewegt. Verdreht man die Spannschraube 28 so, daß sich der Hebelarm 27 nach oben bewegt, wird das Spannelement 21 im Sinne eines Verspannens der Schneidplatte 3 verschwenkt, d.h. der vordere Hebelarm 26 und mit diesem die Spannpartie 22 schwenken nach unten. Diese Hebelverhältnisse gewährleisten bei kurzer Bauweise eine große Spannkraft.

Ferner ist vorgesehen, daß das Spannelement 21 mit Spiel auf der am Halterkopf 5 fest angeordneten Schwenkachse 25 sitzt. Die von der Schwenkachse 25 durchgriffene Lagerbohrung 31 des Spannelementes 21 besitzt also einen etwas größeren Durchmesser als die Lagerachse 25. Dies begünstigt beim Verspannen das Anpassen der Spannpartie 22 an die Spannfläche 23.

Ferner geht aus der Zeichnung hervor, daß das beim Ausführungsbeispiel vorhandene Spannelement 21 im parallel zur Schwenkachse 25 gelegten Querschnitt eine U-ähnliche Gestalt aufweist und somit zwei Schenkel 32,33 bildet, die über einen oben verlaufenden Quersteg 34 miteinander verbunden sind. Zwischen die beiden Spannelementschenkel 32,33 greift ein an der Oberseite des feststehenden Halterkopfteils 29 angeordneter Lagervorsprung 35, so daß das Spannelement 21 auf den der U-Gestalt des Spannelementes im Querschnitt entsprechend ausgebildeten Lagervorsprung 35 aufgesetzt ist. Da die beiden Spannelementschenkel 32,33 von beiden Seiten her an dem Lagervorsprung 35 anliegen, lagert und führt dieser das Spannelement und sichert es gegen ein seitliches Verkippen. Dies ist in Zusammenhang damit zu sehen, daß vor allem beim Arbeiten mit einer der Nebenschneiden 14,15 starke Querkräfte auf die Schneidplatte 3 ausgeübt werden können. Diese werden über die Spannelementschenkel 32, 33 von dem Lagervorsprung 35 aufgenommen.

Einer der beiden Spannelementschenkei, der Schenkel 33, der seitlich außen am feststehenden Halterkopfteil 29 angeordnet ist, bildet die Spannpartie 22, die unter Bildung eines die Schneidplatte 3 aufnehmenden Zwischenraumes der Auflagefläche 19 nach oben hin gegenüberliegt.

Der Schneidplattenanschlag 20 ist an dem feststehenden Halterkopfteil 29 angeordnet. Prinzipiell könnte er auch an dem Spannelement 33 sitzen. Wegen der schwenkbaren Anordnung des Spannelementes 33 hätte er dann jedoch keine exakt definierte Lage. Aufgrund der Anordnung des Schneidplattenanschlags 20 am feststehenden Halterkopfteil 29 erhält man deshalb wesentlich definiertere Verhältnisse.

Beim Ausführungsbeispiel wird der Schneidplattenanschlag 20 von einem Rundbolzen gebildet, der in eine Querbohrung 36 des feststehenden Halterkopfteils 29 eingepaßt ist. Durch die Verwendung eines Rundbolzens erhält man zwischen der Schneidplatte 3 und dem Anschlag 20 nur eine linienartige Berührung.

In Abwandlung des dargestellten Ausführungsbeispieles könnte der Rundbolzen 20 oberhalb der Auflagefläche 19 frei in den erwähnten Zwischenraum zwischen der Auflagefläche 19 und dem Spannelementschenkel 33 ragen. Unter den auftretenden Bearbeitungskräften würde dann jedoch die Gefahr einer Verformung des Schneidplattenanschlags bestehen. Daher ist beim Ausführungsbeispiel die Anordnung so getroffen, daß die Querbohrung 26 und der Rundbolzen 20 über einen Teil ihres Querschnitts, nämlich mit dem unteren Querschnittsteil, innerhalb der mit ihrer Oberseite die Auflagefläche 19 bildenden Haltekopfpartie 37 verlaufen. Auf diese Weise ist der Rundbolzen 20 ein Stück weit in die Auflagefläche 19 eingelassen, so daß er hinten abgestützt ist.

Da die Bearbeitungsverhältnisse unabhängig davon sein sollen, welches der beiden Endstücke 7,8 gerade verwendet wird, ergibt sich in Zusammenhang mit dem geneigten Verlauf der Auflagefläche 19, daß in Seitenansicht gesehen die Oberseiten 9 der beiden Bearbeitungs-Endstücke 7,8 stumpfwinkelig zueinander angeordnet sind.

Die Schneidplatte 3 wird seitlich außen am Halterkopf 5 so festgespannt, daß die Schneiden des vorderen Bearbeitungs-Endstücks 7 in der Projektion von oben gesehen frei liegen. Dabei liegt die Schneidplatte mit ihrer einen Außenseite etwa in der zugewandten Außenseite des Halterkopfes 5. Da nun die zugewandte Nebenschneide 15 des vorderen Bearbeitungs-Endstücks 7 etwas über die Außenseite des Halterkopfes 5 vorsteht, steht im Falle einer Schneidplatte, die eine sowohl zur in halber Schneidplattenbreite verlaufenden Längsmittelebene 38 als auch zur in halber Länge rechtwinkelig zur Längsmittelebene 38 verlaufenden Quermittelebene 39 symmetrische Gestalt aufweist, auch das hintere Bearbeitungs-Endstück 8 zumindest mit dem Eckbereich 40 zwischen Hauptschneide und außen angeordneter Nebenschneide seitlich vor den Haltekopf vor, wie aus Fig. 3 hervorgeht. Dies bringt die Gefahr mit sich, daß beim Abdrehen einer Werkstückfläche 18 mit der Nebenschneide 15 der hinten angeordnete Eckbereich 40 an der Werkstückfläche 18 streift, falls das Werkstück einen entsprechend großen Radius besitzt und das Werkzeug entsprechend weit zugestellt wird. Dies kann zu einem unerwünschten Nachschneiden der Werkstückfläche 18 durch das hintere Bearbeitungs-Endstück 8 führen.

Um hier Abhilfe zu schaffen, kann man die Auflagefläche 19 und das Spannelement 21 in Stirnansicht (Fig.3) vom zu bearbeitenden Werkstück her gesehen leicht verdreht so anordnen, daß bei eingespannter Schneidplatte deren Längsmittelebene 38 einen kleinen Winkel mit der durch die strichpunktierte Linie 41 symbolisierten Vertikalen bildet und dabei von oben seitlich außen nach unten innen hin verläuft. Dieser Winkel kann sehr klein sein und dabei der Größenordnung nach im Bereich von 1° bis 2° liegen. Beim Ausführungsbeispiel ist der gesamte Halterkopf 5 in dieser Weise verdreht am Schaft 4 angeordnet. Diese leicht verdrehte Anordnung ergibt in Zusammenhang damit, daß das hintere Bearbeitungs-Endstück 8 weiter unten als das vordere Bearbeitungs-Endstück 7 liegt, daß der zur Werkstückfläche 18 hin vorstehende Schneidenbereich 40 des hinteren Bearbeitungs-Endstücks 8 nicht bis zur Werkstückfläche 18 reicht sondern etwas von dieser entfernt ist.

Würde es sich um einen Schneidplattenhalter handeln, bei dem die Schneidplatte an der entgegengesetzten Außenseite befestigt wird, müßte der Halterkopf in entgegengesetzter Richtung verdreht sein. In beiden Fällen, d.h. unabhängig davon, an welcher Halterkopfseite die Schneidplatte festgespannt wird, läßt sich die identische Schneidplatte verwenden.

## Patentansprüche

1. Stech- und/oder Drehwerkzeug mit einer Schneidplatte (3), die mindestens ein Bearbeitungs-Endstück zum Bearbeiten eines Werkstücks durch Einstechen mittels einer stirnseitigen Hauptschneide (10) und/oder Abdrehen mittels einer seitlichen Nebenschneide (14, 15) aufweist, und einem an einer Werkzeugmaschine befestigbaren Schneidplattenhalter (2), der einen Halterkopf zum auswechselbaren Halten der Schneidplatte (3) aufweist, der eine von vorne oben nach hinten unten geneigt verlaufende Auflagefläche (19) zum längsverschieblichen und seitlich geführten Auflegen der Schneidplatte bildet, einen dem hinteren Schneidplattenende zugeordneten Schneidplattenanschlag (20) aufweist und ein der Schneidplattenoberseite zugeordnetes Spannelement (21) trägt, das schwenkbeweglich angeordnet ist und einen vorderen Hebelarm mit einer an der Schneidplatte angreifenden und diese gegen die Auflagefläche (19) spannenden Spannpartie sowie einen hinteren Hebelarm mit einer in Höhenrichtung verschraubbaren und sich auf der feststehenden Oberseite des Halterkopfes abstützenden Spannschraube bildet, dadurch gekennzeichnet, daß das Spannelement (21) auf einer Schwenkachse (25) am Halterkopf (5) gelagert ist und daß die Schneidplattenoberseite eine Spannausnehmung (24) enthält, deren Wand oder Begrenzungskante eine von der in die Spannausnehmung (24) eingreifenden Spannpartie (22) des Spannelements (21) hintergriffene Spannfläche (23) bildet, so daß die Schneidplatte (3) sowohl gegen die Auflagefläche (19) als auch gegen den Schneidplattenanschlag (20) gespannt wird.

2. Werkzeug nach Anspruch 1, dadurch gekennzeichnet, daß die Spannausnehmung (24) einen winkeligen oder bogenförmigen Querschnitt aufweist.

3. Werkzeug nach Anspruch 1 oder 2, dadurch gekennzeichnet, daß die Spannfläche (23) über die Schneidplattenbreite durchgehend ausgebildet ist.

4. Werkzeug nach einem der Ansprüche 1 bis 3, dadurch gekennzeichnet, daß der Schneidplattenanschlag (20) von einem in eine Querbohrung (36) des Halterkopfes (5) eingepaßten Rundbolzen gebildet wird.

5. Werkzeug nach Anspruch 4, dadurch gekennzeichnet, daß die Querbohrung (36) und der Rundbolzen (20) über einen Teil ihres Querschnitts innerhalb der mit ihrer Oberseite die Auflagefläche (19) bildenden Halterkopfpartie (37) verlaufen.

6. Werkzeug nach einem der Ansprüche 1 bis 5, dadurch gekennzeichnet, daß das Spannelement (21) mit Spiel auf der am Halterkopf (5) fest angeordneten Schwenkachse (25) sitzt.

7. Werkzeug nach einem der Ansprüche 1 bis 6, dadurch gekennzeichnet, daß das Spannelement (21) einen U-ähnlichen Querschnitt mit zwei Spannelementschenkeln (32,33) aufweist, von denen ein Spannelementschenkel (33) die Spannpartie (22) bildet, und das Spannelement (21) auf einen zwischen die Spannelementschenkel (32,33) greifenden und an diesen anliegenden Lagervorsprung (35) an der Halterkopf-Oberseite aufgesetzt ist, so daß der Lagervorsprung (35) eine Lagerung und Führung für das Spannelement (21) bildet.

8. Werkzeug nach einem der Ansprüche 1 bis 7 mit einer an beiden Enden jeweils ein gleiches Bearbeitungs-Endstück aufweisenden Schneidplatte, dadurch gekennzeichnet, daß in Seitenansicht gesehen die Oberseiten (9) der beiden Bearbeitungsendstücke (7,8) stumpfwinkelig zueinander angeordnet sind.

9. Werkzeug nach Anspruch 8, dadurch gekennzeichnet, daß in Seitenansicht gesehen die Spannausnehmung (24) in der Mitte der Schneidplattenoberseite zwischen den beiden Bearbeitungsendstücken (7,8) angeordnet ist und beidseitig jeweils eine Spannfläche (23,23a) bildet.

10. Werkzeug nach einem der Ansprüche 1 bis 9 mit einer an beiden Enden jeweils ein gleiches Bearbeitungs-Endstück aufweisenden Schneidplatte, die eine sowohl zur in halber Schneidplattenbreite verlaufenden Längsmittelebene als auch zur in halber Länge rechtwinkelig zur Längsmittelebene verlaufenden Quermittelebene symmetrische Gestalt aufweist, wobei die Auflagefläche seitlich am Halterkopf angeordnet ist, so daß bei eingespannter Schneidplatte das hintere Bearbeitungs-Endstück zumindest mit dem Eckbereich zwischen Hauptschneide und außen angeordneter Nebenschneide seitlich vor den Halterkopf vorsteht, dadurch gekennzeichnet, daß die Auflagefläche (19) und das Spannelement (21) in Stirnansicht vom zu bearbeitenden Werkstück (6) her gesehen leicht verdreht so angeordnet sind, daß bei eingespannter Schneidplatte (3) deren Längsmittelebene (38) einen kleinen Winkel mit der Vertikalen (41) bildet und dabei von oben seitlich außen nach unten innen hin verläuft.

11. Werkzeug nach Anspruch 10, dadurch gekennzeichnet, daß der Winkel der Größenordnung nach im Bereich von 1° bis 2° liegt.

## Claims

1. Lancing and/or turning tool with a cutting tip (3), with at least one machining end-piece for machining a workpiece by lancing by means of a main cutting edge (10) at the end, and/or turning by means of a side secondary cutting edge (14, 15), and a cutting tip holder (2) which has, for interchangeable holding of the cutting tip (3), a retaining head which forms a bearing surface running at an angle from top front to bottom rear, for longitudinally adjustable and side-guided loading of the cutting tip, which has a cutting tip stop (20) assigned to the rear cutting tip end and carries a clamping element (21) assigned to the cutting tip top side, which is swivel-mounted and forms a front lever arm with a clamping section engaging at the cutting tip and clamping the latter against the bearing surface, together with a rear lever arm with a locking screw which can be screwed up vertically and rests on the fixed top side of the retaining head, characterized in that the clamping element (21) is mounted on a swivel axis (25) on the retaining head (5) and that the top side of the cutting tip contains a clamping recess (24), the side or limiting edge of which forms a clamping surface engaged from behind by the clamping section (22) of the clamping element (21) engaging in the clamping recess (24), so that the cutting tip (3) is clamped against both the bearing surface (19) and also the cutting tip stop (20).

2. Tool according to claim 1, characterized in that the clamping recess (24) has an angular or curved cross-section.

3. Tool according to claim 1 or 2, characterized in that the clamping surface (23) is continuous over the width of the cutting tip.

4. Tool according to any of claims 1 to 3, characterized in that the cutting tip stop (20) is formed by a round bolt fitted into a cross hole (36) in the retaining head (5).

5. Tool according to claim 4, characterized in that the cross hole (36) and the round bolt (20) run over one part of their cross-section within the retaining head section (37) which, with its upper side, forms the bearing surface (19).

6. Tool according to any of claims 1 to 5, characterized in that the clamping element (21) rests with play on the swivel axis (25) firmly mounted on the retaining head (5).

7. Tool according to any of claims 1 to 6, characterized in that the clamping element (21) has a U-shaped cross-section with two clamping element limbs (32, 33), with one of these clamping element limbs (33) forming the clamping section (22), and the clamping element (21) is placed on a bearing projection (35), on the top side of the retaining head, which engages between the clamping element limbs (32, 33) and is in contact with them, so that the bearing projection (35) forms a support and guide for the clamping element (21).

8. Tool according to any of claims 1 to 7, with a cutting tip having an identical machining end-piece at each end, characterized in that viewed from the side, the top sides (9) of the two machining end-pieces (7, 8) are arranged at an obtuse angle relative to one another.

9. Tool according to claim 8, characterized in that, in a side view, the clamping recess (24) is located in the centre of the top side of the cutting tip between the two machining end-pieces (7, 8), forming a clamping surface (23, 23a) on either side.

10. Tool according to any of claims 1 to 9, with a cutting tip having an identical machining end-piece at each end, with a shape which is symmetrical both to the longitudinal centre plane running at half the cutting tip width, and also to the transverse centre plane running at half the length at right-angles to the longitudinal centre plane, wherein the bearing surface is arranged to the side of the retaining head so that, with the cutting tip clamped, the rear machining end-piece extends to the side in front of the retaining head (5), at least with the corner area between the main cutting edge and the externally-mounted secondary cutting edge, characterized in that the bearing surface (19) and the clamping element (21), in an end view seen from the workpiece (6) to be machined, are arranged with a slight twist so that, with the cutting tip (3) clamped, its longitudinal centre plane (38) forms a small angle with the vertical (41) and at the same time runs from the outside top to the inside bottom..

11. Tool according to claim 10, characterized in that the angle is of the order of 1° to 2°.

## Revendications

1. Outil de poinçonnage et/ou de tournage, comportant une matrice de découpage (3) qui présente au moins un tronçon d'usinage pour l'usinage d'une pièce par plongée au moyen d'un tranchant principal frontal (10) et/ou par enlèvement au moyen d'une arête de coupe secondaire (14, 15) latérale, et comportant un support (2) de matrice de découpage, susceptible d'être fixé sur une machine-outil, qui présente une tête de support destinée à servir de support, de façon interchangeable, à la matrice de découpage (3), qui constitue une surface d'appui (19) inclinée s'étendant du haut et de l'avant vers le bas et vers l'arrière, destinée à porter la matrice de découpage avec possibilité de déplacement longitudinal et guidage latéral, qui présente une butée (20) de matrice de découpage associée à l'extrémité arrière de la matrice, et qui porte un élément de serrage (21) associé à la face supérieure de la matrice de découpage, élément qui est pivotant et qui constitue un bras de levier avant comportant une partie de serrage agissant sur la matrice de découpage et serrant celle-ci contre la surface d'appui (19), ainsi qu'un bras de levier arrière comportant une vis de serrage susceptible d'être serrée dans le sens de la hauteur et s'appuyant sur la face supérieure fixe de la tête de support, **caractérisé en ce que** l'élément de serrage (21) est monté sur un axe de pivotement (25) présent sur la tête de support (5) et en ce que la face supérieure de la matrice de découpage comporte un évidement de serrage (24), dont la paroi ou l'arête de délimitation constitue une surface de serrage (23) saisie par la partie de serrage (22) de l'élément de serrage (21) qui s'engage dans l'évidement de serrage (24), de telle sorte que la matrice de découpage (3) est serrée aussi bien contre la surface d'appui (19) que contre la butée (20) de la matrice de découpage.

2. Outil selon la revendication 1, caractérisé en ce que l'évidement de serrage (24) présente une section anguleuse ou arquée.

3. Outil selon la revendication 1 ou 2, caractérisé en ce que la surface de serrage (23) est formée de façon continue sur la largeur de la matrice de découpage.

4. Outil selon l'une des revendications 1 à 3, caractérisé en ce que la butée (20) de la matrice de découpage est formée par un boulon rond introduit dans un perçage traversant (36) de la tête de support (5).

5. Outil selon la revendication 4, caractérisé en ce que le perçage traversant (36) et le boulon rond (20) s'étendent, sur une partie de leur section, à l'intérieur de la partie (37) de la tête de support qui constitue, par sa face supérieure, la surface d'appui (19).

6. Outil selon l'une des revendications 1 à 5, caractérisé en ce que l'élément de serrage (21) repose avec jeu sur l'axe de pivotement (25) monté de façon fixe sur la tête de support (5).

7. Outil selon l'une des revendications 1 à 6, caractérisé en ce que l'élément de serrage (21) présente une section semblable à un U, avec deux branches (32, 33), dont une branche (33) constitue la partie de serrage (22), et l'élément de serrage (21) est placé sur une saillie formant butée (35), présente sur la face supérieure de la tête de support, agissant entre les branches (32, 33) de l'élément de serrage, et s'appuyant sur celles-ci, de telle sorte que la saillie formant butée (35) constitue un support et un élément de guidage pour un élément de serrage (21).

8. Outil selon l'une des revendications 1 à 7, comportant une matrice de découpage présentant, aux deux extrémités, un tronçon d'usinage similaire, caractérisé en ce que, vu de côté, les faces supérieures (9) des deux tronçons d'usinage (7, 8) forment un angle obtus l'une par rapport à l'autre.

9. Outil selon la revendication 8, caractérisé en ce que, vu de côté, l'évidement de serrage (24) est situé au milieu de la face supérieure de la matrice de découpage, entre les deux tronçons d'usinage (7, 8), et constitue, de part et d'autre de lui, une surface de serrage (23, 23a).

10. Outil selon l'une des revendications 1 à 9, comportant une matrice de découpage présentant, aux deux extrémités, un même tronçon d'usinage, matrice qui présente une forme symétrique aussi bien dans le plan médian longitudinal s'étendant dans la demi-largeur de la matrice de découpage, que dans le plan médian transversal s'étendant, à la moitié de la longueur, perpendiculairement au plan médian longitudinal, la surface d'appui étant située sur le côté de la tête de support, de telle sorte que, lorsque la matrice de découpage est serrée, le tronçon d'usinage arrière dépasse latéralement devant la tête de support, par la zone d'angle entre le tranchant principal et l'arête de coupe secondaire située à l'extérieur, caractérisé en ce que la surface d'appui (19) et l'élément de serrage (21), vu de face à partir de la pièce à usiner (6), est placée, de façon légèrement tournée, de telle sorte que, lorsque la matrice de découpage (3) est serrée, son plan médian longitudinal (38) forme un léger angle avec la verticale (41), et s'étende ainsi du haut, de l'extérieur et à partir du côté, vers le bas et vers l'intérieur.

11. Outil selon la revendication 10, caractérisé en ce que la valeur de l'angle, selon un ordre de grandeur, est comprise entre 1° et 2°.
